**Europäisches Patentamt**

**European Patent Office**

**Office européen des brevets**

(19)

(11) Veröffentlichungsnummer: **0 084 580**
**B1**

(12) # EUROPÄISCHE PATENTSCHRIFT

(45) Veröffentlichungstag der Patentschrift:
05.11.86

(21) Anmeldenummer: 82100479.3

(22) Anmeldetag: 23.01.82

(51) Int. Cl.⁴: **B 60 C 27/06,** B 60 C 27/12, B 60 C 27/08

(54) Reifen- und Gleitschutzkette.

(43) Veröffentlichungstag der Anmeldung:
03.08.83 Patentblatt 83/31

(45) Bekanntmachung des Hinweises auf die Patenterteilung:
05.11.86 Patentblatt 86/45

(84) Benannte Vertragsstaaten:
AT BE CH DE FR GB IT LI LU NL SE

(56) Entgegenhaltungen:
DE-A-2 824 912
DE-C-195 916
FR-A-356 684
FR-A-535 143
US-A-2 970 632

(73) Patentinhaber: Asbeck, Heinz, Markusstrasse 38,
D-4600 Dortmund- Hohensyburg (DE)

(72) Erfinder: Asbeck, Heinz, Markusstrasse 38, D-4600
Dortmund- Hohensyburg (DE)

(74) Vertreter: Willert, Rolf, Patent- und
Rechtsanwälte Dr.- Ing. Stuhlmann Dipl.- Ing.
Willert Dr.- Ing. Oidtmann Dipl.- Ing.
Bockermann Dipl.- Ing. Schneiders Bergstrasse
159, D-4630 Bochum 1 (DE)

## Beschreibung

Die Erfindung betrifft eine Reifen- und Gleitschutzkette der im Oberbegriff des Anspruchs 1 angegebenen Art.

Insbesondere bei schnellfahrenden Erdbewegungsmaschinen, wie z.B. Muldenkippern, Dumpern, usw. treten bei den Reifen- und Gleitschutzketten spezielle Probleme auf, die teilweise durch den Verschleiß der Kettenteile, teilweise durch die auf die Kette einwirkenden Fliehkräfte bedingt sind.

Bei hoher Drehgeschwindigkeit der Reifen werden die Ketten den radial nach außen gerichteten Fliehkräften ausgesetzt. In dem theoretischen Idealfall, daß die Reifenoberfläche völlig regelmäßig rund ist und die Kette ohne Spiel stramm auf dem Reifen sitzt, kann man davon ausgehen, daß sich die Kette nicht von der Reifenoberfläche abhebt. Aber selbst wenn die Kette sehr fest auf den Reifen aufgespannt wird, was natürlich bei stehendem Fahrzeug erfolgen muß, lockert sich die Kette im Betrieb zunächst durch die Walkbewegungen des Reifens. Darüber hinaus unterliegt jede Kette einem mehr oder weniger schnell fortschreitenden Verschleiß mit der Folge, daß sich die Kette lockert. Eine lockere Kette hebt dann bei sich schnell drehendem Reifen von der Lauffläche des Reifens ab. Damit die sich im Betrieb vom Reifen abhebende Kette keine Beschädigungen verursachen kann und damit die bestimmungsgemäße Funktion der Reifen- und Gleitschutzkette gewährleistet ist, muß das Abheben der Kette weitgehend vermieden, zumindest jedoch in bestimmten Grenzen gehalten werden.

Früher übliche Ketten besaßen als Spannvorrichtung eine Spannkette, die durch im äußeren Randbereich der Kette befindliche Halteringe oder Ösen geführt war, so daß die Spannkette im gespannten Zustand ein der Kreisform mehr oder weniger nahekommendes Vieleck bildete. Auf Grund der geringen Elastizität des Reifens war der Zeitraum, in welchem die Kette nach einsetzendem Verschleiß noch einigermaßen stramm auf dem Reifen saß, relativ kurz. Um zu gewährleisten, daß die Kette möglichst lange stramm an dem Reifen anliegt, kamen dann Feder-Spannelemente zum Einsatz, die für eine gewisse Vorspannung sorgten, d.h., die Kette wurde durch die Feder-Spannelemente trotz eines gewissen Verschleißes auf die Reifenoberfläche gezogen, und zwar so lange, wie die Vorspannung vorhanden war.

In Übereinstimmung mit dem Oberbegriff des Anspruchs 1 ist aus der DE-A-195 916 eine Reifen- und Gleitschutzkette bekannt, bei der das Laufnetz so groß ausgebildet ist, daß es teilweise über die Seitenflächen des Reifens reicht. Die Grundkörper des Laufnetzes bestehen aus im Grundriß kreuzförmigen Platten, und an den vier Enden dieser kreuzförmigen Platten sind aus Eisendraht gebildete, im Grundriß etwa quadratische Verbindungsbügel eingehängt. Die Radial-Spannelemente werden durch an den beiden Seitenbereichen des Laufnetzes in die Verbindungsbügel eingehakte Verbindungsbleche gebildet, die mit einem Ende in Verbindungsbügel einhaken und mit dem anderen Ende ein auf jeder Seite des Reifens umlaufendes Stahlseil umfassen.

Diese Reifen- und Gleitschutzkette läßt sich optimal nur für eine bestimmte Größe oder einem bestimmten Größenbereich von Reifen verwenden. Bei sehr großen Reifen liegt ein relativ großer Bereich der Seitenteile des Reifens frei, und es ist nicht ohne erheblichen Aufwand möglich, das Laufnetz entsprechend zu vergrößern, um die Seitenbereiche des Reifens zu schützen.

Der Erfindung liegt die Aufgabe zugrunde, eine Reifenund Gleitschutzkette der eingangs genannten Art derart weiterzubilden, daß sie mühelos an verschiedene Reifengrößen anpaßbar ist, so daß praktisch unabhängig von der Reifengröße mit geringem Aufwand ein Schutz der Seitenbereiche des Reifens erzielt wird. Die Kette soll leicht gespannt werden und den Walkbewegungen des Reifens leicht folgen können.

Diese Aufgabe wird in Übereinstimmung mit dem Kennzeichnungsteil des Anspruchs 1 dadurch gelöst, daß die Stromabweiser über Seitenteilverbindungsbügel miteinander zu Stoßabweistersträngen verbunden sind, welche mit Übergangsverbindungsbügeln am Rand des Laufnetzes eingehakt sind.

Durch die erfindungsgemäße Ausgestaltung der Reifenund Gleitschutzkette besteht die Möglichkeit, durch Aneinanderfügung einer entsprechenden Anzahl von Stoßabweisern mit Seitenteilverbindungebügeln mehr oder weniger lange Stoßabweiserstränge zu bilden. Hierdurch läßt sich unabhängig von der Reifengröße stets ein guter Schutz der Seitenteile der Reifen erzielen.

Zwar ist aus der FR-A-535 143 eine Reifen- und Gleitschutzkette bekannt, bei der seitlich an das Laufnetz angehängte, laschenähnliche schmale Platten vorgesehen sind, die mit an ihren Enden anschließenden Schraubenfedern und einem Zentrierring gespannt werden, jedoch bietet diese Konstruktion keine mit der Erfindung vergleichbare Möglichkeit der leichten Anpaßbarkeit der Stoßabweiserstränge. Bei der bekannten Reifenschutzkette sind nämlich die als Stoßabweiser dienenden länglichen Platten Einzelglieder, die nicht mit anderen Gliedern zusammengefügt werden können.

Das Spannen der erfindungsgemäßen Kette erfolgt in radialer Richtung, so daß keine Tangentialkräfte aufgebracht werden müssen. Es sind also nur relativ geringe Kräfte zum Spannen der Kette notwendig. Bedingt durch die erfindungsgemäße Konstruktion kann das Spannen der Kette an mehreren Stellen separat erfolgen, wobei nur ein Bruchteil derjenigen Kraft aufgebracht werden muß, mit der früher die Spannkette oder das Spannseil gespannt wurde, wobei sich die dort aufgebrachte Kraft auf mehrere Stellen verteilte.

Durch die Weiterbildung nach Anspruch 2 ist ein einfaches Anschließen der Seitenteile der Kette an das Laufnetz der Kette möglich. Derartige Seitenteile kommen bevorzugt zum Einsatz bei Ketten, deren Laufnetz aus Grundkörpern mit im wesentlichen quadratischem Grundriß zusammengesetzt ist, wobei die Grundkörper über Verbindungsbügel miteinander verbunden sind. Ein derartiges Laufnetz ist in einer am gleichen Tage wie die vorliegende Anmeldung eingereichten Patentanmeldung des Anmelders näher beschrieben.

Im Patentanspruch 3 ist die Ausbildung der Stoßabweiserstränge, welche die Seitenteile der Kette bilden, näher definiert. An diese Stoßfängerstränge schließen sich die Radial-Spannelemente gemäß der Erfindung an. Die Seitenteile der erfindungsgemäßen Kette lassen sich also durch problemloses Ineinanderhaken der Bügel und Stoßabweiser herstellen.

Gemäß Patentanspruch 4 ist an der inneren Reifenseitenwand ein Stahlseil vorgesehen, welches beispielsweise mittels eines Seilschlosses zu einem Ring geschlossen ist. Ein solches Seil vermag extrem hohe Zugkräfte aufzunehmen.

Durch die im Patentanspruch 5 angegebene Weiterbildung wird erreicht, daß die Stoßabweiserstränge auf der Innenseite des Reifens nicht in Umfangsrichtung verschoben werden können, so daß ein guter und gleichmäßiger Schutz des Reifens an dieser Stelle sichergestellt ist.

Grundsätzlich besteht die Möglichkeit, an jedem einzelnen Stoßfängerstrang ein Radial-Spannelement, beispielsweise eine Schraubenfeder zu befestigen, wobei das Radial-Spannelement achsseitig dann an einem Haltering befestigt wird (Patentansprüche 6 und 7). Um Schraubenfedern einzusparen und um die für das Spannen der Kette aufzuhringende Zeit zu verkürzen, werden gemäß Patentanspruch 8 jeweils zwei oder noch mehr Stoßabweiserstränge gleichsam zusammengefaßt, um lediglich nur ein Radial-Spannelement beziehungsweise eine Schraubenfeder für mehrere Stoßabweiserstränge zu verwenden.

Bisher erfolgte das Nachspannen von Reifen- und Gleitschutzketten dann, wenn es beispielsweise vom Fahrer nach erfolgter Inaugenscheinnahme der Kette für erforderlich gehalten wurde. Außer der Sichtprüfung hatte der Fahrer nur noch die Möglichkeit, durch Hin- und Herbewegen einzelner Kettenglieder festzustellen, ob und gegebenenfalls wie weit sich die Kette gelockert hatte. Wann ein Nachspannen der Kette erforderlich war, beurteilte der Fahrer also auf der Grundlage relativ ungenau zu erfassender Kriterien. Das Nachspannen selbst erfolgte dann in der oben beschriebenen Weise durch Anziehen der Spannkette, gegebenenfalls nachdem zuvor einige Glieder aus der Kette entfernt wurden. Erfindungsgemäß wird das Nachspannen der Kette wesentlich vereinfacht durch die im Patentanspruch 9 definierten Einstellelemente. Diese an einem Haltering fixierten Einstellelemente bieten dem Fahrer die Möglichkeit, ganz gezielt an bestimmten Stellen die Kette nachzuspannen, wohingegen bei den früher verwendeten Ketten ein nur ungenaues Nachspannen möglich war, weil man nicht überblicken konnte, wie sich die Kräfte auf die einzelnen von der Spannkette durchsetzten Ösen am Rand der Kette verteilten. Es war früher üblich, daß der Fahrer bei jedem Nachspannen der Kette zunächst die Spannkette anzog, dann etwas hin- und herfuhr, um dann nochmals die Spannkette anzuziehen. Dieser Vorgang wurde so oft wiederholt, bis der Fahrer meinte, daß die Kette fest auf der Reifenoberfläche saß. Gemäß Patentanspruch 10 kann das Nachspannen der Kette auf einfache Weise dadurch erfolgen, daß die sich am Haltering abstützende Hülse gedreht wird, was zur Folge hat, daß das betreffende Radial-Spannelement und der an diesem befestigte Stoßfängerstrang radial nach innen gezogen werden. Ist der Verschleiß der Kette so weit fortgeschritten, daß einzelne Glieder aus der Kette herausgenommen werden müssen, so kann durch entsprechendes Verdrehen der erwähnten Hülse ein Nachgeben der Radial-Spannelemente nach außen zwecks Anpassung an die nunmehr verkleinerte Kette bewerkstelligt werden.

Das Drehen der Einstellelemente kann insbesondere bei der im Patentanspruch 11 angegebenen Weiterbildung äußerst rasch mittels eines bei der Radmontage üblicherweise verwendeten pneumatischen oder elektrischen Schraubendrehers, der auf ein bestimmtes Drehmoment eingestellt ist, erfolgen. Im Vergleich zu der früher erforderlichen Zeit zum Nachspannen der Kette ist bei der erfindungsgemäßen Kette nur noch ein Bruchteil dieser Zeit zum Nachspannen erforderlich.

Hing der Zeitpunkt des Nachspannens der Kette früher im wesentlichen vom Umfang der Erfahrung des Fahrers ab, weil keine zuverlässigen Kriterien für eine entsprechende Beurteilung zur Verfügung standen, so kann mit der im Patentanspruch 12 angegebenen Anordnung stets zuverlässig festgestellt werden, wann ein Nachspannen der Kette erforderlich ist. An dem Abstand zwischen der Anzeigevorrichtung und beispielsweise einer Markierung auf dem Radial-Spannelement kann man genau ablesen, wie weit der Verschleiß der Kette fortgeschritten ist, um dann, wenn der erwähnte Abstand einen bestimmten Wert aufweist, die Kette nachzuspannen.

Im folgenden wird die Erfindung anhand von Ausführungsbeispielen näher erläutert. Es zeigen:

Fig. 1 eine Vertikal-Querschnittansicht durch ein bei Erdbewegungsmaschinen zum Einsatz kommendes Rad mit auf die Reifenoberfläche aufgezogener Reifen- und Gleitschutzkette,

Fig. 2 eine Seitenansicht der dem Fahrzeug zugewandten Seite des Rades gemäß Fig. 1, wobei die Reifen- und Gleitschutzkette nur angedeutet ist,

Fig. 3 eine Seitenansicht der Außenseite des Rades, wobei die Reifen- und Gleitschutzkette nur angedeutet ist,

Fig. 4 einen Ausschnitt einer Reifen- und Gleitschutzkette, wobei der Ausschnitt den Übergang vom Laufnetz zum Seitenteil zeigt,

Fig. 5 bis 7 eine Seitenansicht, eine Längs-Querschnittansicht und eine Draufsicht auf einen Stoßabweiser, wie er in den Seitenteilen der Reifenund Gleitschutzkette verwendet wird,

Fig. 8 und 9 eine Draufsicht beziehungsweise Querschnittansicht eines Stoßabweisers mit darin eingehaktem Übergangs- oder Seitenverbindungsbügel,

Fig. 10 und 11 eine Draufsicht beziehungsweise Querschnittansicht eines Stoßabweisers, durch den ein mit einer Klemmkausche bestücktes Drahtseil gezogen ist,

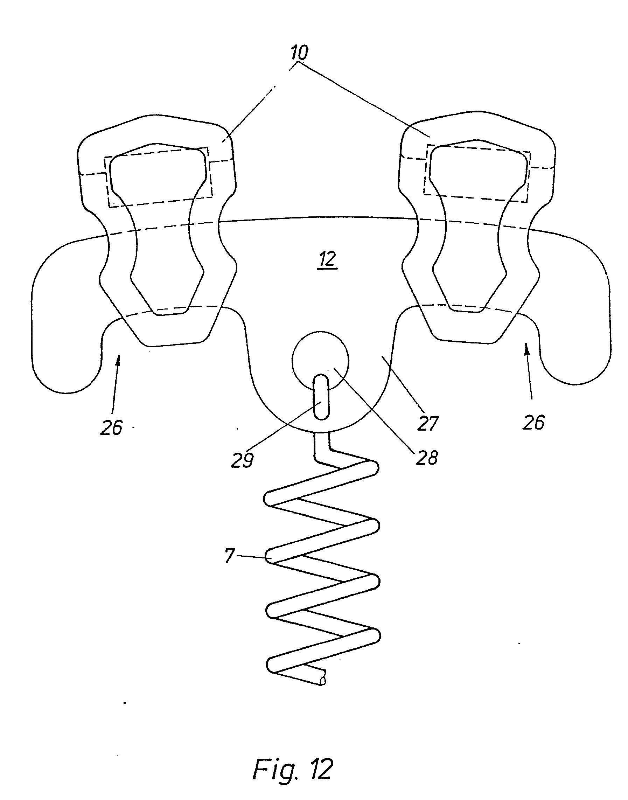

Fig. 12 den Übergangsbereich zwischen den Enden zweier benachbarter Stoßabweiserstränge und einer als Radial-Spannelement dienenden Schraubenfeder, wobei als Überbrückungsglied ein jochähnliches Element verwendet wird,

Fig. 13 eine Draufsicht auf einen Übergangsbereich zwischen den Enden mehrerer Stoßabweiserstränge und einer als Radial-Spannelement dienenden Schraubenfeder, wobei drei Überbrückungselemente vorgesehen sind,

Fig. 14 eine Draufsicht auf ein als Schraubenfeder ausgebildetes Radial-Spannelement zwischen dem Stoßabweiser am Ende eines Stoßabweiserstrangs und einem Haltering,

Fig. 15 eine Schnittansicht entlang der Schnittlinie XV -XV in Fig. 14, und

Fig. 16 und 17 jeweils eine Querschnittansicht eines zum Nachspannen der Reifen- und Gleitschutzkette verwendeten Einstellelements in eingefahrener beziehungsweiser ausgefahrener Stellung.

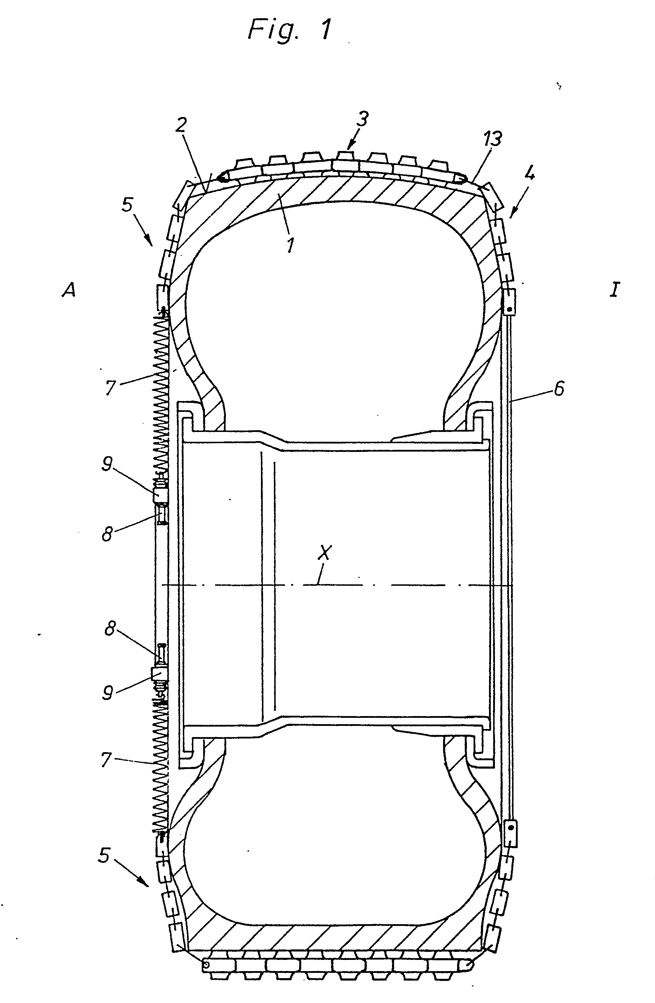

Figur 1 zeigt eine Vertikal-Querschnittansicht eines Rades, wie es bei schweren, schnellaufenden Erdbewegungsmaschinen zum Einsatz kommt. Auf der Lauffläche 2 des Reifens 1 befindet sich das Laufnetz 3 einer Reifen- und Gleitschutzkette. Die spezielle Ausgestaltung des Laufnetzes 3 ist nicht Gegenstand der vorliegenden Anmeldung. Grundsätzlich kann das Laufnetz beliebig ausgebildet sein, als Beispiel soll jedoch davon ausgegangen werden, daß das Laufnetz 3 so ausgebildet ist, wie es in einer am gleichen Tage wie diese Anmeldung eingereichten Parallelanmeldung desselben Anmelders beschrieben ist. Danach besteht das Laufnetz 3 aus im wesentlichen quadratischen Grundriß aufweisenden Grundkörpern, die mittels Verbindungsbügeln zu einer Kette zusammengefügt sind. Ein Teil eines solchen Kettenlaufnetzes ist in

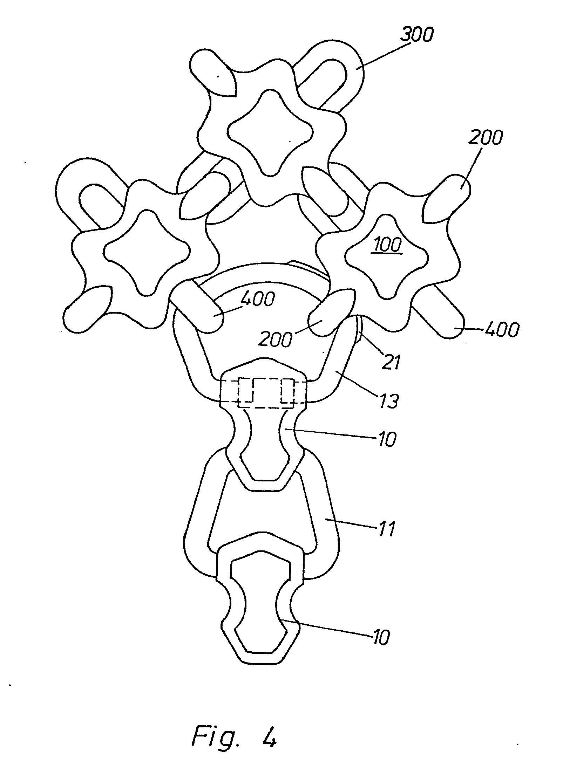

Figur 4 in der oberen Hälfte der Zeichnung dargestellt.

Wie aus Figur 1 ersichtlich ist, erstreckt sich das Laufnetz 3 der Reifen- und Gleitschutzkette (im folgenden: Kette) nicht bis zu den abgewinkelten Rändern des Reifens 1, sondern die Ränder des Laufnetzes haben von den Reifenrändern einen gewissen Abstand.

An die Ränder des Laufnetzes 3 schließen sich sowohl auf der dem Fahrzeug zugewandten Seite des Reifens, der hier als Innenseite bezeichneten Seite I, als auch auf der Außenseite A radial verlaufende Stoßabweiserstränge 4 beziehungsweise 5 an. Die durch die Stoßabweiserstränge gebildeten Seitenteile der Kette schützen die Seitenwandungen des Reifens. Auf der Innenseite I werden die Enden der Stoßabweiserstränge von einem Stahlseil 6, welches die an den Strangenden vorgesehenen Stoßabweiser durchsetzt, festgehalten. Auf der Außenseite A sind Schraubenfedern aufweisende Radial-Spannelemente 7 vorgesehen.

Die äußeren Enden der Schraubenfedern 7 sind in die Enden der Stoßabweiserstränge 5 eingehakt, die inneren Enden der Schraubenfedern 7 sind in Ösen von Einstellelementen 8 eingehakt, die an einen Haltering 9 U-förmigen Querschnitts fixiert sind. Wie man anhand von Figur 1 erkennt, ermöglichen die Schraubenfedern 7 ein Bewegen der Stoßfängerstränge 5 in radialer, aber auch in tangentialer Richtung.

Die Schraubenfedern 7 sind mittels der Einstellelemente 8 auf eine gewisse Vorspannung eingestellt. Die Kraft/Weg-Kennlinie der Schraubenfedern 7 verläuft relativ flach, das heißt, zum Verlängern der Schraubenfedern um ein bestimmtes Stück ist eine relativ geringe Kraft erforderlich. Dies hat zur Folge, daß auch dann, wenn die Kette bis zu einem bestimmten Grade verschlissen ist und demzufolge die Enden der Stoßabweiserstränge 4 und 5 etwas zur Achse X des Rades hingewandert sind, eine zwar geringere, aber nicht wesentlich veränderte Vorspannkraft durch die Schraubenfedern 7 aufgebracht wird, so daß die Kette noch stramm auf der Reifenoberfläche gehalten wird.

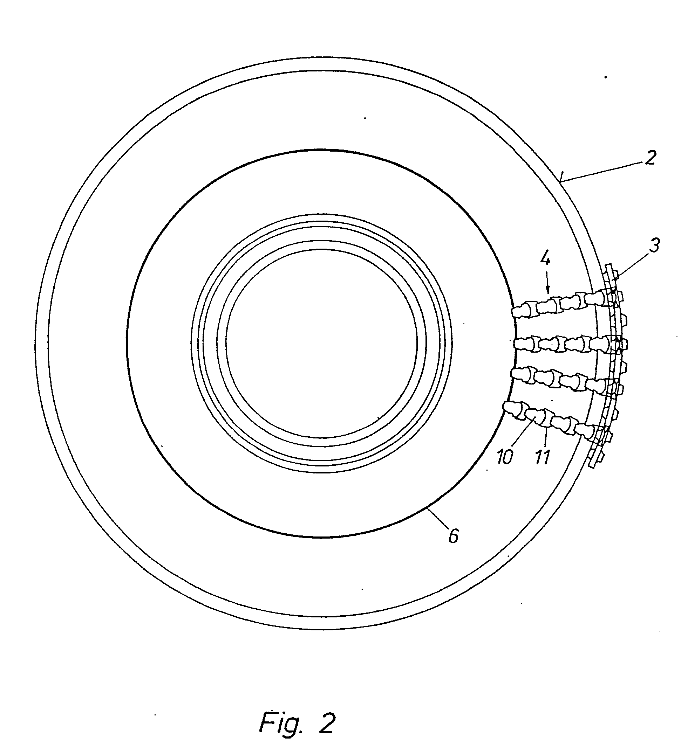

Figur 2 zeigt die Innenseite des in Figur 1 dargestellten Rades. Von den sich über den gesamten Umfang verteilenden Stoßabweiserstränge 4 sind nur einige dargestellt. Die Stränge 4 erstrecken sich von dem inneren Rand des Laufnetzes 3 im Bereich der inneren Reifenkante bis zu dem Stahl-Halteseil 6. Jeder Stoßabweiserstrang besteht aus mehreren Stoßabweisern 10 sowie in diese eingehakten Seitenverbindungsbügeln 11. Statt des bevorzugt zu verwendenden Stahl-Halteseils kann auch eine Haltekette vorgesehen sein. Die Stoßabweiserstränge 4 und 5 sind so dicht nebeneinander angeordnet und haben eine solche Länge, daß ein guter Schutz der Reifenseitenwände gewährleistet ist. Um eine hohe Lebensdauer der Kette zu gewährleisten, besitzen die Stoßabweiser zumindest auf ihren Außenseiten Verschleißprofile. Die Stoßabweiser können aber auch auf beiden Seiten Verschleißprofile tragen, so daß die Stoßabweiser gegebenenfalls nach Wenden weiterbenutzt werden können, falls die eine Seite verschlissen beziehungsweise beschädigt ist.

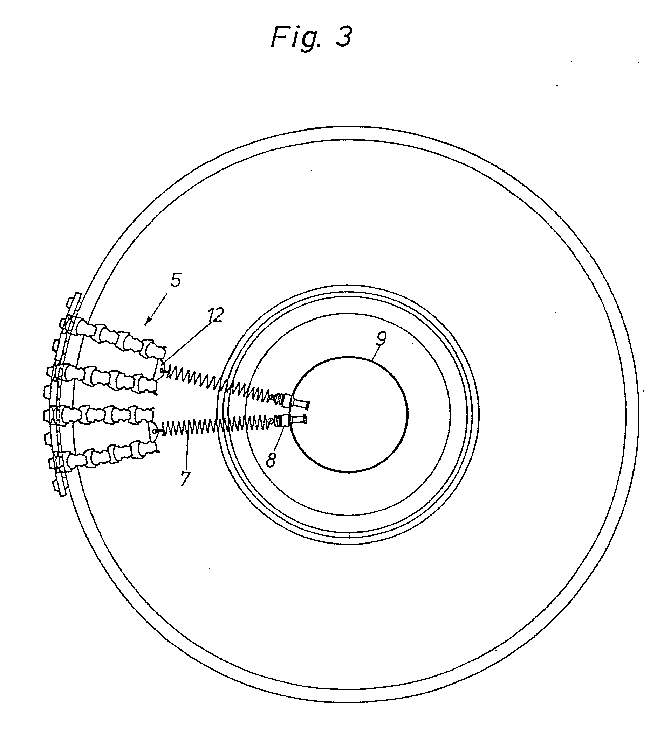

Figur 3 zeigt die Außenseite des in Figur 1 dargestellten Rades. Auch hier sind nur einige der über den Umfang verteilt angeordneten Stoßabweiserstränge 5 zeichnerisch dargestellt. Grundsätzlich besteht zwar die Möglichkeit, jedes Ende eines Stoßabweiserstrange 5 mit einer Schraubenfeder 7 zu verbinden, so daß jeder einzelne Stoßabweiserstrang separat gespannt werden kann. Um jedoch einerseits den Aufwand an Schraubenfedern einzuschränken und andererseits eine zu dichte Anordnung der Einstellelemente 8 an dem Haltering zu vermeiden und um darüber hinaus ein rasches Spannen der Kette zu ermöglichen, sind jeweils mehrere, in diesem Ausführungsbeispiel zwei Stoßabweiserstränge 5 mittels eines jochähnlich ausgebildeten Überbrückungsglieds 12 verbunden, in dessen Mitte jeweils eine Schraubenfeder 7 eingehakt ist.

Im folgenden sollen die hier wesentlichen Einzelheiten der Kette detailliert beschrieben werden.

Wie insbesondere aus Figur 4 hervorgeht, sind im Übergangsbereich zwischen den Rändern des Laufnetzes 3 und den seitlichen Stoßfängersträngen Übergangsverbindungsbügel 13 vorgesehen. Das Laufnetz besteht aus den im oberen Teil von Figur 4 dargestellten, etwa rechteckigen Grundriß aufweisenden Grundkörpern 100, bei denen auf gegenüberliegenden Seiten rechtwinklig zur Grundkörperebene angeordnete Haltebügel 200 vorgesehen sind. Mittels senkrecht zu den Haltebügeln 200 orientierten Verbindungsbügeln 300 sind die Grundkörper 100 zu einem Verbund zusammengefügt. Am Rand des Laufnetzes sind nicht die senkrecht zu den Haltebügeln 200 orientierten Verbindungsbügel 300 vorgesehen, sondern spezielle Verbindungsbügel 400, die ebenso wie die Haltebügel 200 senkrecht zu der durch die Grundkörper 100 definierten Ebene orientiert sind.

Gemäß Figur 4 ist der Übergangsverbindungsbügel 13 durch das senkrecht dazu orientierte Bügelpaar 200, 400 geführt. An den Übergangsverbindungsbügel 13 schließen sich dann abwechselnd Stoßabweiser 10 und Seitenverbindungsbügel 11 zur Bildung eines Stoßfängerstranges 4 oder 5 an.

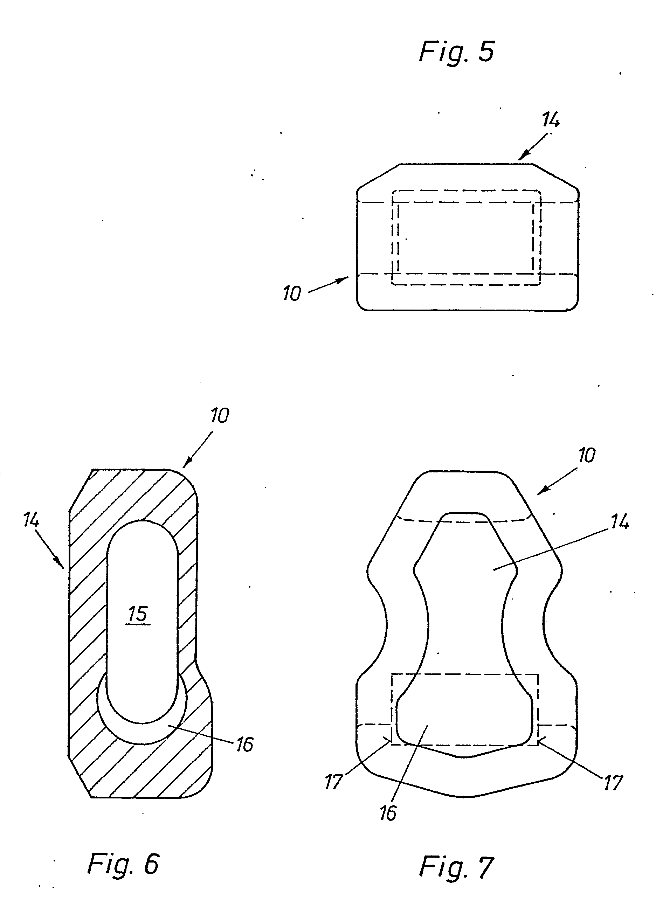

Die Figuren 5 bis 7 zeigen verschiedene Ansichten eines Stoßabweisers 10. Der Stoßabweiser 10 ist gemäß Zeichnung plattenförmig ausgebildet, vorzugsweise handelt es sich um ein gesenkgeschmiedetes Stahlteil. Auf der Außenseite des Stoßabweisers 10 ist ein Verschleißprofil 14 ausgebildet. Jeder Stoßabweiser 10 besitzt sine Durchgangsöffnung 15 mit einer sich nicht bis zu den Seitenrändern des Stoßabweisers 10 erstreckenden

Ausnehmung l6, die in ihren seitlichen Endbereichen Anschläge 17 bildet.

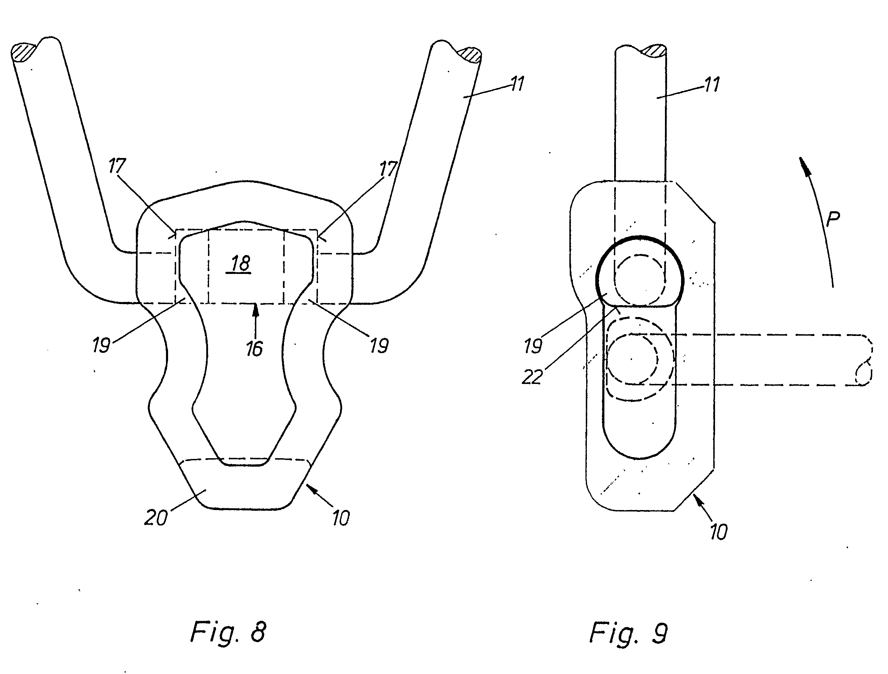

Die Verbindung zwischen einem Stoßabweiser 10 und einem Seitenverbindungsbügel 11 oder auch einem Übergangsverbindungsbügel 13 ist in den Figuren 8 und 9 veranschaulicht. Der dort dargestellte Seitenverbindungsbügel 11 besteht aus Rundstahl. Er ist so gebogen, daß seine beiden Enden eine Einhaklücke 18 bilden, wobei die Einhaklücke 18 seitlich begrenzt ist durch zwei im Abstand voneinander angeordnete, ringbundartige Ansätze 19 des Seitenverbindungsbügels 11. Die Übergangsverbindungsbügel 13 sind etwas anders gebogen als die Seitenverbindungsbügel 11, haben aber insbesondere, was den Bereich der Einhaklücke angeht, denselben Aufbau. Je nach Ausbildung des Laufnetzes ist es möglicherweise zweckmäßig, den Übergangsverbindungsbügel 13 gemäß Figur 4 an einer in einen Grundkörper 100 eingreifenden stelle mit einer Verstärkung 21 zu versehen, um ein eventuelles Spiel zwischen den in Eingriff befindlichen Teilen weitestgehend auszuschließen.

Um einen Stoßabweiser 10 mit einem Seiten- oder Übergangsverbindungsbügel 11 beziehungsweise 13 zu verhaken, wird beispielsweise der Seitenverbindungsbügel 11 über die in Figur 8 unten dargestellte schmalstelle 20 des Stoßabweisers 10 in den stoßabweiser 10 eingesetzt, wobei die durch den Stoßabweiser und den Seitenverbindungsbügel definierten Ebenen gemäß Figur 9 etwa senkrecht aufeinanderstehen. Aus Figur 9 erkennt man, daß eine etwa senkrecht zur Ebene des Seitenverbindungsbügels 11 angeordnete Abflachung 22 ein Verschieben des Seitenverbindungsbügels in der Durchgangsöffnung 15 ermöglicht. Nachdem der Seitenverbindungsbügel 11 an dasjenige Ende der Durchgangsöffnung 15 geschoben ist, wo sich die Ausnehmung 16 befindet, wird der Seitenverbindungsbügel 11 entsprechend den in Figur 9 eingezeichneten Pfeil P um 90° gedreht, so daß der Seitenverbindungsbügel und der Stoßabweiser etwa in einer Ebene liegen. Ein seitliches Verrutschen der beiden Teile gegeneinander ist nicht möglich, weil die ringbundartigen Ansätze 19 an den Anschlägen 17 der Ausnehmung 16 anliegen.

Je nach Reifen- und dementsprechend nach Kettengröße können die Einzelteile der Kette unterschiedlich dimensioniert sein. Bei Ketten für schwere Erdbewegungsmaschinen, die Reifen mit einem Durchmesser von bis zu 3,5 m besitzen, haben die oben beschriebenen Seitenverbindungsbügel 11 einen Durchmesser von etwa 12 mm, die Stoßabweiser 10 haben eine Länge von etwa 75 mm und eine maximale Breite von etwa 50 mm. Die Stärke der Stoßabweiser 10 einschließlich des Verschleißprofils beträgt an der dicksten Stelle ca. 35 mm. Die Schwachstelle 20 ist entsprechend einer Einhaklücke von hier vorzugsweise etwa 18 mm so dimensioniert, daß sich der Seitenverbindungsbügel 11 ohne schwierigkeiten einhaken läßt.

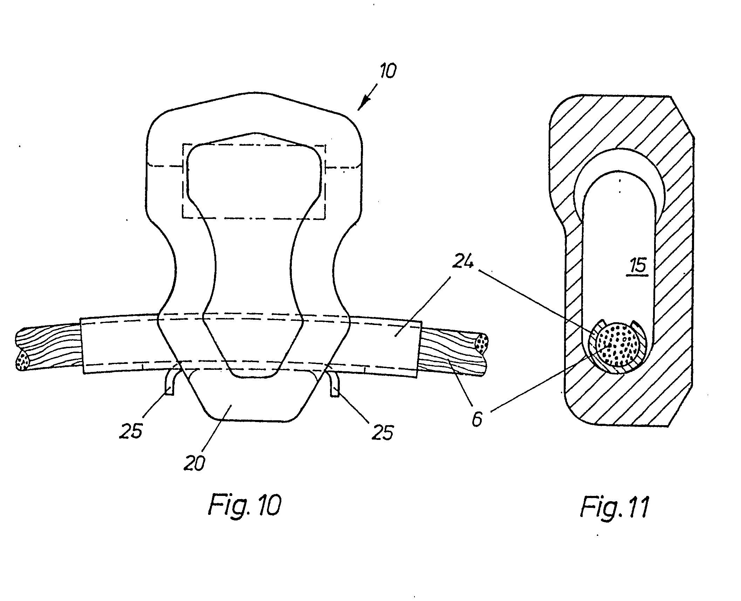

Die Figuren 10 und 11 veranschaulichen, wie der letzte Stoßabweiser 10 eines Stoßabweiserstrangs 4 auf der Reifeninnenseite an dem Stahl-Halteseil 6 fixiert ist. Auf dem Halteseil 6 ist eine beispielsweise aus Eisenblech bestehende Kausche 24 festgeklemmt. Mit der Kausche hat das den Stoßabweiser 10 durchsetzende Stück des Halteseils 6 dann immer noch einen etwas geringeren Durchmesser als die Durchlaßöffnung 15 im unteren Bereich des Stoßabweisers 10, das heißt im Bereich der Schwachstelle 20, wo das Seil den Stoßabweiser 10 durchläuft. Somit kann der Stoßabweiser 10 bei Bewegungen des Reifens und der Kette auf dem Halteseil hin- und herrollen, so daß kaum ein Verschleiß entsteht. Aus dem Material der Kausche 24 sind zwei Haltenasen 25 nach außen gebogen. Der Abstand der Haltenasen 25 ist so bemessen, daß der dort angreifende Bereich des Stoßabweisers 10 gerade zwischen die Haltenasen paßt, damit sich der Stoßabweiser nicht in Längsrichtung des Halteseils 6 verschieben kann.

Bild 12 zeigt im einzelnen die Verbindung zweier am Ende zweier Stoßabweiserstränge 5 befindlicher Stoßabweiser 10 mit einer Schraubenfeder 7. Das jochähnlich ausgebildete Überbrückungsglied 12 durchsetzt mit seinen beiden Armen jeweils eine Durchlaßöffnung 15 eines Stoßabweisers 10, so daß die Stoßabweiser 10 jeweils in einer Ausbuchtung 26 des Überbrückungsgliedes 12 festliegen. Ein vorspringendes Mittelteil 27 des Überbrückungsglieds weist ein Loch 28 auf, in das ein an einem Ende der Schraubenfeder 7 vorgesehener Haken 29 eingreift.

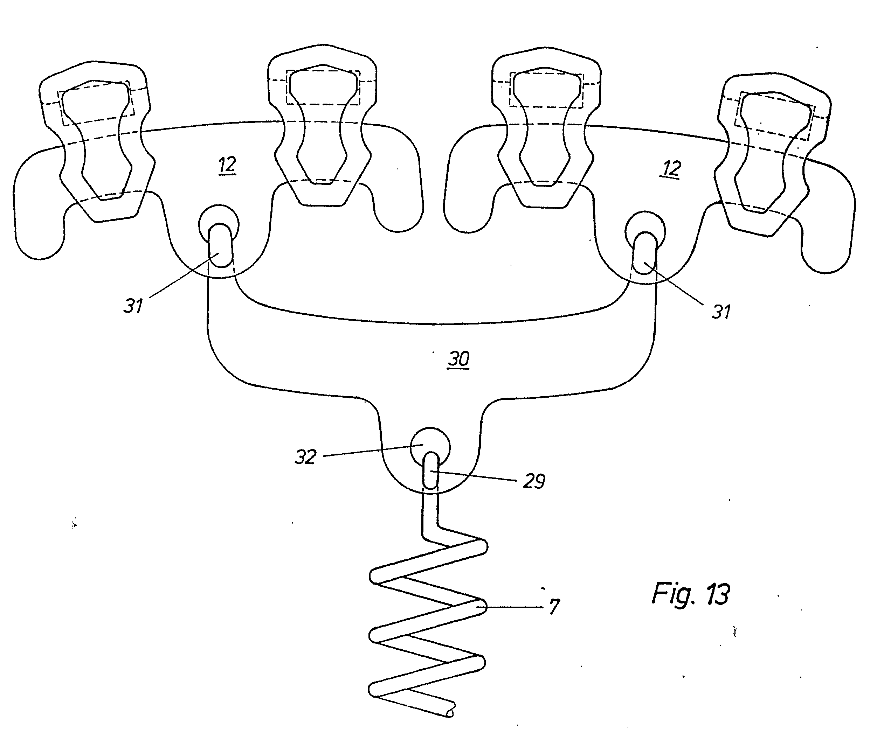

Gemäß einer etwas anderen Ausführungsform, die in Figur 13 dargestellt ist, ist icht in jedes Überbrückungsglied 12 eine Schraubenfeder 7 eingehakt, sondern zwei benachbarte Überbrückungsglieder 12 sind zunächst mittels eines weiteren Überbrückungsglieds 30 mit daran endseitig angebrachten Endhaken 31 verbunden, und der Haken 29 der Schraubenfeder 7 ist in ein Loch 32 in dem Überbrückungsglied 30 eingehakt. Eine solche Lösung ist dann zu empfehlen, wenn der Durchmesser des Reifens nicht sehr groß ist, weil ansonsten die anderen, also achsseitigen Enden der Schraubenfedern 7 nicht genügend Platz nebeneinander besitzen. Als Vorteil kommt bei dieser Ausführungsform zum Tragen, daß das Spannen bzw. Nachspannen der Kette sehr rasch erfolgen kann, weil weniger Federn zu spannen sind.

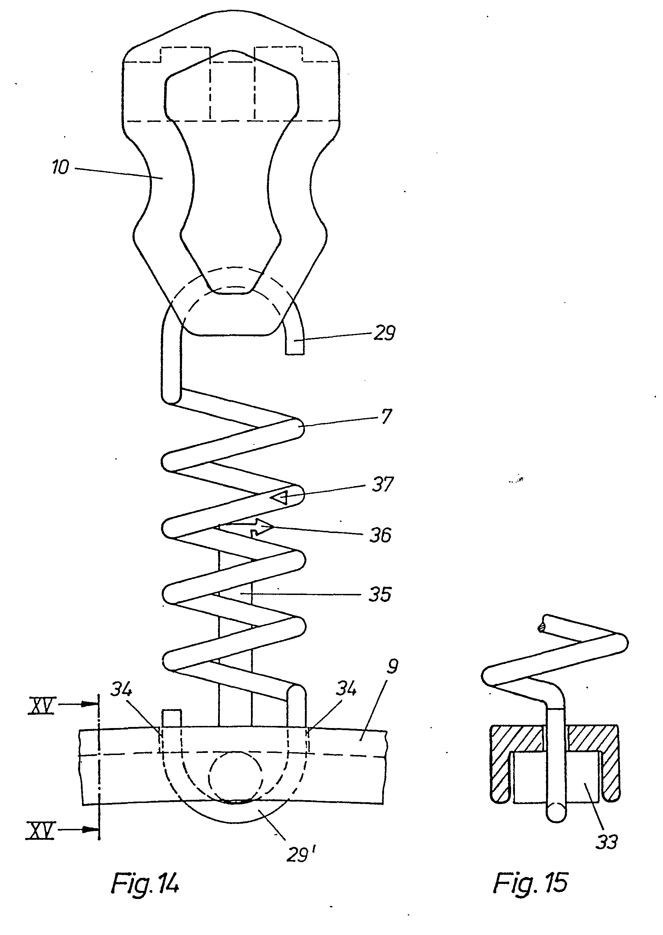

Figur 14 zeigt die Verbindung des letzte Stoßabweisers 10 eines Stoßabweiserstrangs 5 mit dem Haltering 9. In Abweichung von der oben beispielsweise anhand von Figur 1 erläuterten Anordnung sind hier keine Einstellelemente vorgesehen, sondern die Schraubenfeder 7 ist direkt an dem Haltering 9 festgemacht. Wie aus Figur 15 hervorgeht, besitzt der Haltering 9 U-förmigen Querschnitt. Der am achsseitigen Ende der Schraubenfeder 7 vorgesehene Haken 29' greift um einen etwa senkrecht zur Quererstreckung des Haltereifens 9 angeordneten Bolzen 33, wobei der Haken 29' den Haltering 9 im Bereich zweier Bohrungen 34 durchsetzt.

Die in Figur 14 dargestellte Spannanordnung besitzt eine Verschleiß- und Nachspannanzeigevorrichtung, die aus einem an dem Haltering 9 befestigten und von diesem radial nach außen abstehenden Stab 35, einem an dessen oberem Ende angebrachten Pfeil 36 sowie einer an der Schraubenfeder 7 vorgesehenen Markierung 37 besteht. Bei fortschreitendem Verschleiß verkürzt sich die Schraubeneder 7, was zur Folge hat, daß sich die Markierung 37 auf der Schraubenfeder dem Pfeil 36 nähert. Bei einem gewissen Abstand zwischen Markierung 37 und Pfeil 36 oder dann, wenn Markierung und Pfeil praktisch auf gleicher Höhe liegen, nuß die Kette nachgespannt werden, was möglicherweise durch Entfernen einzelner Kettenglieder aus dem Laufnetz erfolgt. Die Verschleiß, und Nachspannanzeigevorrichtung kann auch anders ausgebildet sein, beispielsweise kann er Stab 35 neben der Schraubenfeder 7 angeordnet sein, der es kann ein Anzeigestab an dem letzten Stoßabweiser 10 des Stoßabweiserstrangs 5 angebracht sein.

Um ein einfaches Nachstellen der Kette zu erreichen, wird im Gegensatz zu der Ausführungsform gemäß Figur 14 das achsseitige Ende der Schraubenfeder 7 mit dem Haken 29 nicht direkt in den Haltering 9 eingehakt, sondern in eine Öse 38 des Einstellelements 8.

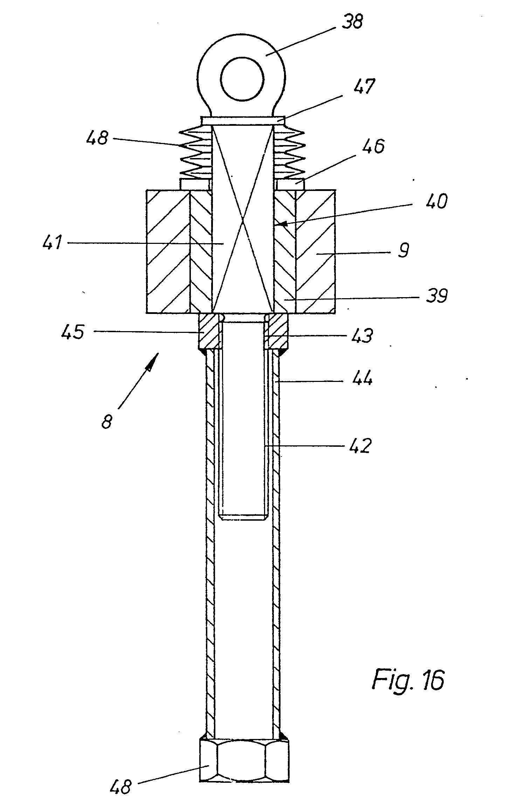

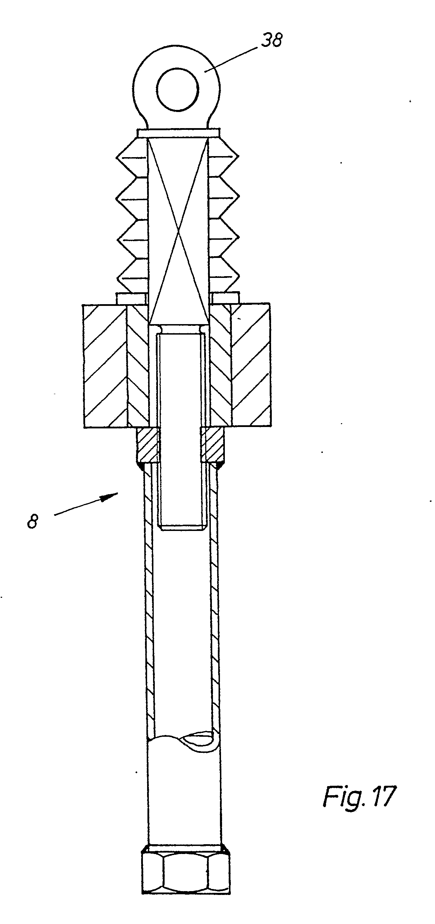

Die Figuren 16 und 17 zeigen eine Längsschnittansicht einer Ausführungsform des erfindungsgemäßen Einstellelements 8. In dem Haltering 9 sitzen, über den Umfang gleichmäßig verteilt, entsprechend der Anzahl der Schraubenfedern 7 mehrere Hülsen 39, von denen in Figur 16 eine dargestellt ist. Die Hülse 39 besitzt eine innere Führungsöffnung 40 nichtkreisrunden, vorzugsweise quadratischen Querschnitts, in welcher ein Bolzen 41, der im Bereich der Führungsöffnung 40 entsprechenden Querschnitt aufweist, in radialer Richtung des Rades verschieblich angeordnet ist. Der Durchmesser des unteren Bolzenteils ist etwas kleiner als im oberen Bolzenteil, und im unteren Bolzenteil ist ein Außengewinde 42 vorgesehen, des mit einem Innengewinde 43 einer Hülse 44 in Eingriff steht. Im Bereich des Halterings 9 weist die Hülse 44 einen verstärkten Rand 45 auf, dessen Stirnseite an der unteren Stirnseite der Führungshülse 39 anliegt und darüber hinaus einen Begrenzungsanschlag für den oberen Teil des Bolzens 41 bildet, so daß dieser sich nicht weiter nach unten bewegen kann, als in Figur 16 dargestellt ist.

Auf der radial außen liegenden Seite des Halterings 9 liegt zwischen einer ringscheibe 46 und einem Ringflansch 47 unterhalb der Öse 38 ein Gummibalg 48, der sich entsprechend der Stellung des Bolzens 41 bezüglich des Halterings 9 zusammendrückt oder auseinanderzieht (vergleiche Figur 17). Der Ringflansch 47 verhindert, daß der Bolzen 41 über ein bestimmtes Maß hinaus gemäß der Zeichnung nach unten gehen kann, selbst wenn der Rand 45 für den Fall, daß an der Öse 38 keine Zugfeder angreift, nicht an der unteren Stirnseite der Führungshülse 39 anschlägt.

Zum Verstellen der Vorspannung der Schraubenfedern 7, das heißt beim Spannen und beim Nachspannen der Kette wird an der am unteren Ende der Hülse 44 befindlichen Sechskantmutter 48 vorzugsweise ein Druckluft- oder Elektrodrehwerkzeug angesetzt, wobei an dem Werkzeug ein bestimmtes Drehmoment eingestellt werden kann. Dieses Drehmoment steht dann in einem bestimmten Verhältnis zu der Vorspannung in den Schraubenfedern.

Was das zuletzt beschriebene Einstellelement angeht, so kann beispielsweise vorgesehen sein, daß die Öse 38 so ausgebildet ist, daß in sie zwei Haken 29' zweier Schraubenfedern 7 eingehakt werden können. Dies kann insbesondere empfehlenswert sein bei Reifen mit nicht allzu großen Durchmessern, damit der zur Verfügung stehende Platz am Haltering 9 für alle Einstellelemente ausreicht.

## Patentansprüche

1. Reifen- und Gleitschutzkette für gummibereifte Fahrzeuge, insbesondere schwere, schnellfahrende Erdbewegungsmaschinen, mit einem auf der Reifenoberfläche (2) aufliegenden Laufnetz (3), das aus Grundkörpern (100) besteht, die mehrere Verbindungsbügel aufweisen, welche jeweils mit einem benachbarten Grundkörper (100) verbunden sind, mit an den Seitenrändern des Laufnetzes sich anschließenden, plattenförmige Stoßabweiser (10) mit Verschleißprofilen (14) aufweisenden Seitenteilen, und einer Spannvorrichtung mit Feder-Spannelementen, die als in radialer Richtung des Reifens (1) elastische Radial-Spannelemente (7) ausgebildet sind, dadurch gekennzeichnet, daß die Stoßabweiser (10) über Seitenteilverbindungsbügel (11) miteinander zu Stoßabweistränsträngen (4, 5) verbunden sind, welche mit Übergangsverbindungsbügeln (13) am Rand des Laufnetzes (3) eingehakt sind.

2. Kette nach Anspruch 1, dadurch gekennzeichnet, daß am Rand des Laufnetzes (3) mehrere Paare von im wesentlichen rechtwinklig zueinander angeordneten, senkrecht zu der Reifenauflagefläche orientierten Verbindungsbügeln (200, 400) vorgesehen sind, durch die jeweils ein Übergangsverbindungsbügel (13) geführt ist.

3. Kette nach Anspruch 2, dadurch gekennzeichnet, daß die Seiten- und Übergangsverbindungsbügel (11, 13), die vorzugsweise aus Rundstahl bestehen, eine Einhaklücke (13) aufweisen, die durch mit Abstand voneinander angeordnete ringbundartige Ansätze (19) an den Bügelenden gebildet wird, und daß die Ansätze (19) eine etwa senkrecht zur Bügelebene verlaufende Abflachung (22) besitzen, die ein Einhaken der Bügel in die mit einer Durchgangsöffnung (15) versehenen Stoßabweiser (10) bei etwa rechtwinkliger Lage von Bügel und Stoßabweiser gestatten.

4. Kette nach Anspruch 2 oder 3, dadurch gekennzeichnet, daß an der inneren Reifenseitenwand die jeweils letzten Stoßabweiser (10) der Stoßabweiserstränge (4) von einer Haltekette, vorzugsweise von einem Stahl-Halteseil (6) fixiert sind.

5. Kette nach Anspruch 4, dadurch gekennzeichnet, daß das Halteseil die Durchgangsöffnungen (15) der Stoßabweiser (10) durchsetzt und auf das Halteseil (6) im Bereich der Stoßabweiser (10) jeweils eine Kausche (24) aufgeklemmt ist, die Haltenasen (25) aufweist, welche ein Verschieben des betreffenden Stoßabweisers auf dem Halteseil verhindern.

6. Kette nach einem der vorhergehenden Ansprüche, dadurch gekennzeichnet, daß an der äußeren Reifenseitenwand zwischen den jeweils letzten Stoßabweisern der Stoßabweiserstränge und einem Haltering (9) die Radial-Spannelemente (7) eingespannt sind.

7. Kette nach Anspruch 6, dadurch gekennzeichnet, daß an jedem Stoßabweiserstrang (5) ein Radial-Spannelement vorgesehen ist.

8. Kette nach Anspruch 8, dadurch gekennzeichnet, daß an den Enden wenigstens jeweils zweier benachbarter Stoßabweiserstränge (5) ein vorzugsweise jochähnlich ausgebildetes Überbrückungsglied (12) vorgesehen ist, an dem entweder direkt ein Radial-Spannelement (7) oder ein weiteres, inneres Überbrückungsglied (30), welches mehrere Überbrückungsglieder (12) verbindet, angreift.

9. Kette nach einem der Ansprüche 1 bis 8, dadurch gekennzeichnet, daß die Radial-Spannelemente (7) achsseitig mit verstellbaren Einstellelementen (8) verbunden sind, die an einem Haltering (9) fixiert sind.

10. Kette nach Anspruch 9, bei der die Einstellelemente (8) als in dem vorzugsweise U-förmigen Querschnitt aufweisenden Haltering (9) drehfest und radial verschiebliche Bolzen (41) ausgebildet sind, an deren einem Ende sich mindestens ein Einhakelement, vorzugsweise eine Öse (38) befindet, während achsseitig an jedem Bolzen ein Außengewinde (42) vorgesehen ist, daß sich mit einem Innengewinde (43) einer sich am Haltering (9) abstützenden drehbaren Hülse (44) in Eingriff befindet.

11. Kette nach Anspruch 10, dadurch gekennzeichnet, daß die Hülse an dem dem Haltering (9) abgewandten Ende eine vorzugsweise angeschweißte Mutter, insbesondere Sechskantmutter (48) aufweist.

12. Kette nach einem der Ansprüche 1 bis 11, dadurch gekennzeichnet, daß in oder neben dem Radial-Spannelement eine sich radial erstreckende Verschleiß- und Nachspannanzeigevorrichtung (35, 36, 37) vorgesehen ist.

## Claims

1. A tyre and skid protection chain for rubbertyred vehicles, more particularly heavy fast earthmoving machinery, the chain having: a tread network (3) disposed on the tyre surface (2) and comprising basic members (100) having a number of connecting stirrups each connected to an adjacent basic member (100); plate-like impact dampers (10) which follow on from the side edges of the tread network (3) and which have side members having wearing sections (14); and a clamping facility having spring clamping elements in the form of radial clamping elements (7) resilient radially of the tyre (1), characterised in that the impact dampers (10) are interconnected by way of lateral component connecting stirrups (11) to form impact-damping strands (4, 5) hooked to the edge of the network (3) by way of transition connecting stirrups (13).

2. A chain according to claim 1, characterised in that a number of pairs of connecting stirrups (200, 400) disposed substantially at right angles to one another and perpendicularly to the bearing surface of the tyre are provided at the edge of the network 3 and each guide a transition connecting stirrup (13).

3. A chain according to claim 2, characterised in that the side and transition connecting stirrups (11, 13) are preferably made of round steel and are formed with a hooking gap (13) bounded by spacedapart projections (19) which resemble annular collars and which are disposed at the stirrup ends, and the projections have a faceting (22) which is substantially perpendicular to the stirrup plane and which, when the stirrup and the impact damper are positioned substantially perpendicularly to one another, enable the stirrup to be hooked into the impact dampers (10), the same being formed with a continuous aperture (15).

4. A chain according to claim 2 or 3, characterised in that the last impact dampers (10) of the strands (4) are secured to the inner side wall of the tyre by a retaining chain, preferably a steel retaining cable (6).

5. A chain according to claim 4, characterised in that the retaining cable extends through the apertures (15) in the impact dampers (10) and a thimble (24) is clamped on the retaining cable (6) near the impact dampers (10) and has retaining projections (25) which prevent the particular impact damper concerned from moving on the cable.

6. A chain according to any of the previous claims, characterised in that the radial clamping elements (7) are clamped to the outer side wall of the tyre between the final impact dampers of the impact damper strands and a retaining ring (9).

7. A chain according to claim 6, characterised in that a radial clamping element is provided on each impact damper strand (5).

8. A chain according to claim 8, characterised in that a preferably yoke-like bridging element (12) is provided at the ends of at least two adjacent impact damper strands (5) and is engaged either directly by a radial clamping element (7) or by another inner bridging member (30) interconnecting a number of bridging members (12).

9. A chain according to any of claims 1 to 8, characterised in that the radial clamping elements (7) are connected on the axis side to adjustable adjusting elements (8) secured to a retaining ring (9).

10. A chain according to claim 9 in which the adjusting elements (9) are in the form of pins (41) disposed non-rotatably and with provision for radial movement in the preferably U-section retaining ring (9), at least one hooking element, preferably an eye or loop (38) or the like, being disposed at one end of such pins while each pin has on the axis side an external screwthread (42) which is in engagement with an internal screwthread (43) of a rotatable sleeve (42) bearing on the retaining ring (9).

11. A chain according to claim 10, characterised in that the sleeve (44) has a preferably welded-on nut, more particularly a hexagonal nut (48), at the end remote from the retaining ring (9).

12. A chain according to any of claims 1 to 11, characterised in that a radially extending facility (35, 36, 37) for indicating wear and slackening of tension is provided in or adjacent the radial clamping element.

## Revendications

1. Chaîne pour pneumatiques antidérapante pour véhicules montés sur pneus en caoutchouc, notamment pour engins de terrassement lourds à vitesse rapide, comportant une bande de roulement réticulaire (3) reposant sur la surface du pneu (2), laquelle bande de roulement réticulaire se compose de corps de base (100), qui présentent plusieurs étriers de jonction, lesquels sont respectivement reliés à un corps de base (100) limitrophe, comportant sur les bords latéraux de la bande de roulement réticulaire des déflecteurs de chocs (10) en forme de plaques qui se succèdent, avec des parties latérales présentant des profilés d'usure (14), et un dispositif de tension comportant des éléments tendeurs à ressort, lesquels sont agencés en éléments tendeurs radiaux (7) élastiques dans le sens radial du pneu (1), caractérisée en ce que les déflecteurs de chocs (10) sont reliés entre eux par l'intermédiaire d'étriers de jonction de parties latérales (11) pour former des brins déflecteurs de chocs (4,5), lesquels sont agrafés à l'aide d'étriers de jonction de transition (13) sur le bord de la bande de roulement réticulaire (3).

2. Chaîne selon la revendication 1, caractérisée en ce que sur le bord de la bande de roulement réticulaire (3) sont prévues plusieurs paires d'étriers de jonction (200, 400) agencés essentiellement à angles droits entre eux, orientés perpendiculairement par rapport à la surface d'appui du pneu, à travers lesquels respectivement est mené un étrier de jonction de transition (13).

3. Chaîne selon la revendication 2, caractérisée en ce que les étriers de jonction de transition et latéraux (13, 11), lesquels consistent de préférence en acier rond, présentent un espace vide d'agrafage (13), lequel est formé par des épaulements en forme de collet (19) agencés selon un certain espacement entre eux sur les extrémités d'etriers, et en ce que les epaulements (19) comportent un aplatissement (22) s'étendant de façon sensiblement perpendiculaire au plan des étriers, permettant un agrafage des étriers dans les déflecteurs de choc (10) munis d'une ouverture de passage (15), lorsque l'étrier et le déflecteur de choc se trouvent en position sensiblement à angles droits.

4. Chaîne selon la revendication 2 ou 3, caractérisée en ce que sur la paroi latérale interne du pneumatique sont respectivement fixés les derniers déflecteurs de chocs (10) des brins de déflecteurs de chocs (4) par une chaîne de retenue, de préférence par un câble de retenue (6) en acier.

5. Chaîne selon la revendication 4, caractérisée en ce que le câble de retenue traverse les ouvertures de passage (15) des déflecteurs de chocs (10) et en ce que sur le càble de retenue (6), dans la zone des déflecteurs de chocs (10), est respectivement sertie une cosse (24), qui présente des tenons de retenue (25), lesquels empêchent un déplacement du déflecteur de chocs correspondant sur le câble de retenue.

6. Chaîne selon l'une quelconque des revendications précédentes, caractérisée en ce que, sur la paroi latérale externe du pneu, entre respectivement les derniers déflecteurs de chocs des brins de déflecteurs de chocs et un anneau de retenue (9), sont tendus les éléments tendeurs radiaux (7).

7. Chaîne selon la revendication 6, caractérisée en ce qu'un élément tendeur radial est prévu sur chaque brin de déflecteur de chocs (5).

8. Chaîne selon la revendication 6, caractérisée en ce que, sur les extrémités d'au moins respectivement deux brins de déflecteurs de chocs (5) limitrophes, est prévu un palonnier (12) conçu de préférence en forme d'arceau, sur lequel s'engage soit directement un élément tendeur radial (7), soit un autre palonnier interne (30), lequel relie plusieurs palonniers (12).

9. Chaîne selon l'une des revendications 1 à 8, caractérisée en ce que les éléments tendeurs radiaux (7) sont reliés dans le sens axial à des éléments de réglage (8) réglables, qui sont fixés sur un anneau de retenue (9).

10. Chaîne selon la revendication 9, dans laquelle les éléments de réglage (8) sont conçus en tant qu'axes (41) résistant à la torsion et déplaçables radialement, présentant, de préférence dans la section en forme de U, un anneau de retenue (9), sur une extrémité desquels axes se trouve au moins un élément d'agrafage, de préférence un oeillet (38), tandis qu'axialement sur chaque axe est prévu un filetage extérieur (42) qui se trouve en engagement dans un taraudage (43) d'une douille (44) tournante, reposant sur l'anneau de retenue (9).·

11. Chaîne selon la revendication 10, caractérisée en ce que la douille présente sur l'extrémité opposée à l'anneau de retenue (9) un écrou de préférence rapporté par soudage, notamment un écrou hexagonal (48).

12. Chaîne selon l'une des revendications 1 à 11, caractérisée en ce que, dans ou à proximité de l'élément tendeur radial, est prévu un dispositif indicateur d'usure et de rattrapage de tension (35,36,37) s'étendant radialement.

# Fig. 1

Fig. 2

# Fig. 3

Fig. 4

*Fig. 5*

*Fig. 6*

*Fig. 7*

Fig. 8

Fig. 9

0 084 580

Fig. 11

Fig. 10

Fig. 12

Fig. 13

Fig. 14

Fig. 15

*Fig. 16*

Fig. 17